Europäisches Patentamt

(19) European Patent Office

Office européen des brevets

(11) Publication number : **0 463 759 A2**

(12) **EUROPEAN PATENT APPLICATION**

(21) Application number : **91305208.0**

(22) Date of filing : **10.06.91**

(51) Int. Cl.⁵ : **B29C 67/22**

(30) Priority : **20.06.90 GB 9013747**

(43) Date of publication of application :
**02.01.92 Bulletin 92/01**

(84) Designated Contracting States :
**AT BE CH DE FR GB IT LI NL SE**

(71) Applicant : **RAPRA TECHNOLOGY LIMITED**
**Shawbury**
**Shrewsbury Shropshire, SY4 4NR (GB)**

(72) Inventor : **Gale, George Martin**
**Westwinds, Lyth Bank**
**Shrewsbury, Shropshire, SY3 0BE (GB)**

(74) Representative : **W.P. Thompson & Co.**
**Coopers Building, Church Street**
**Liverpool L1 3AB (GB)**

(54) **Production of thermoplastics foams.**

(57)    A method and apparatus for the production of foamed thermoplastics using nitrogen gas as the foaming agent, wherein the nitrogen gas is mixed with a polymer melt in a mixing apparatus of the type comprising a hollow cylindrical stator (14), (not necessarily static), and a cylindrical rotor (10) journalled for rotation within the stator (14), the facing cylindrical-surfaces of the rotor and stator carrying respective pluralities of circumferentially extending rows of cavities (18, 20) ; between which material to be mixed is passed in travelling through the mixer. Nitrogen gas is introduced into the polymer melt via a gas injector disposed at the upstream end of the mixer.

EP 0 463 759 A2

# FIG. 1

# FIG. 2

The present invention is concerned with the commercial production of thermoplastics foams, such as polyethylene and polystyrene.

Large volumes of extruded foamed plastics sheet, board and sleeves (used mainly for packaging and insulation) are foamed by the incorporation of either CFCs or aliphatic hydrocarbons. It is acknowledged that there is a need to use an alternative to CFCs in order to protect the environment. There is also a need to use a substitute which is non-flammable and creates no hazards in manufacture, storage and application. Pentane and similar hydrocarbons currently used as substitutes for CFCs create severe fire hazards and environmental pollution whilst chemical foaming agents, such as azodicarbonamide can spontaneously ignite during storage and liberate toxic byproducts during the foaming process.

It has previously been proposed to try to use nitrogen as the blowing agent in the production of thermoplastics foams but this has so far been insufficiently successful for commercial use due to the problems of uniformly mixing the nitrogen into the polymer melt.

The conventional techniques for the production of thermoplastics foams involves the use of liquid physical foaming agents or solid powder chemical foaming agents which are readily mixed into the polymer by conventional extruder screws. When a gas, such as nitrogen is to be used for foaming, very thorough mixing is necessary under pressure to achieve a uniform low density foam. Conventional extruder screws do not provide sufficient mixing for this purpose. A known alternative is to incorporate nitrogen gas by diffusion into crosslinked polyolefines using very high pressure autoclaves, but this has the disadvantage of being limited to the manufacture of foam blocks by a batch process from which products have to be cut.

An object of the present invention is to overcome the abovedescribed problems of using nitrogen inherent in the production of thermoplastics foams.

In accordance with the present invention, there is provided a method for the production of foamed thermoplastics using nitrogen gas as the foaming agent, wherein the nitrogen gas is mixed with a polymer melt in a mixing apparatus of the type comprising a hollow cylindrical stator, (not necessarily static), and a cylindrical rotor journalled for rotation within the stator, the facing cylindrical surfaces of the rotor and stator carrying respective pluralities of circumferentially extending rows of cavities, between which material to be mixed is passed in travelling through the mixer.

Preferably, the mixer is a cavity transfer mixer of the type described and claimed in our prior European Patent No. 48590, i.e. one in which the cavities are disposed with (a) the cavities in adjacent rows on the stator circumferentially offset, (b) the cavities in adjacent rows on the rotor circumferentially offset, and (c) the rows of cavities on the stator and rotor axially offset.

It has been found that the mixing process performed by such mixers is sufficient to achieve the necessary uniform mixing of the nitrogen and polymer melt.

The invention also provides an apparatus for the production of foamed thermoplastics using nitrogen gas as the foaming agent, the apparatus comprising a mixer of the abovedescribed type (preferably a Cavity Transfer Mixer of the type claimed in our prior European Patent No. 48590), an extruder for supplying polymer melt to the input end of the mixer, and a gas inlet disposed at or adjacent the inlet end of the mixer for enabling nitrogen gas to be introduced thereto.

Preferably, there is provided a cooling means at the outlet end of the mixer for cooling the polymer/nitrogen mixture prior to this being passed through a die.

In one embodiment, the extruder may have a screw which is attached directly to the rotor of the mixer so that the rotor and screw rotate together.

In another embodiment, the rotor of the mixer can be driven by a separate drive means so as to enable it to be driven at a faster or lower speed than the extruder screw.

By virtue of the present invention, the use of nitrogen as a blowing agent for extruded foamed thermoplastics is made available, thereby eliminating the current use of CFCs and also providing a superior replacement than pentanes and their like.

The invention is described further hereinafter, by way of example only, with reference to the accompanying drawings, in which:-

Fig. 1 is a diagrammatic illustration of the general principle of the use of nitrogen for the production of thermoplastics foam;

Fig. 2 is a diagrammatic sectional view of one embodiment of an apparatus in accordance with the present invention;

Fig. 3 is a diagrammatic sectional view of a second embodiment of an apparatus in accordance with the present invention;

Fig. 4 is a diagrammatic illustration of the generation of a nitrogen gas stream for injection to the mixer;

Figs. 5 and 6 illustrates two possible positions for the outlet of the gas injection in a cavity transfer mixer;

Figs. 7a and 7b illustrate two possible types of gas injector which can be used;

Fig. 8 is a longitudinal section giving more detail of an example of the type of injector shown in Fig. 7a;

Fig. 9 is an enlargement of the circled part A of Fig. 8;

Fig. 10 is a longitudinal section through one embodiment of a cavity transfer mixer for use in the technique of the present invention;

Fig. 11 is a transverse section through the rotor alone, taken along the line II-II in Fig. 10;

Fig. 12 is a transverse section through the stator alone, taken along the line 111-111 in Fig. 10; and

Fig. 13 is a developed view of part of the rotor and stator of the mixer of Fig. 10, illustrating the axial offset of the rows of hemispherical depressions in the rotor and stator.

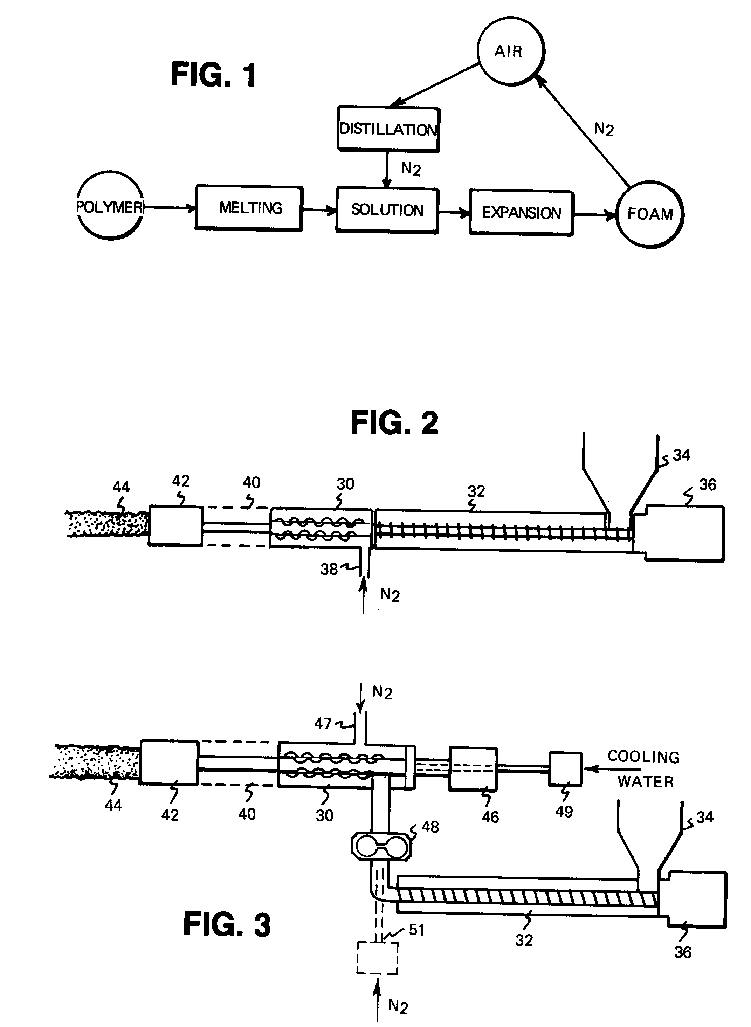

As indicated diagrammatically in Fig. 1, the basic process to be performed involves melting a suitable polymer, introducing nitrogen gas into the polymer melt, and allowing expansion to foam the polymer. The nitrogen, which is obtained from the air by distillation returns to the air during foaming to complete the cycle. The problem is how to obtain sufficient, uniform mixing of the nitrogen with the polymer melt.

It has now been discovered that this can be achieved by using a mixer of the type comprising a hollow cylindrical (not necessarily static) stator, a cylindrical rotor journalled for rotation within the stator, the facing cylindrical surfaces of the rotor and stator carrying respective pluralities of circumferentially extending rows of cavities between which material to be mixed is passed in travelling through the mixer. Preferably, the mixer is a so-called Cavity Transfer Mixer, of the type disclosed and claimed in our earlier European Patent No. 48590, to which reference is hereby directed for full technical details. Such a cavity transfer mixer comprises a hollow cylindrical stator, a cylindrical rotor journalled for rotation within the stator, the facing cylindrical surfaces of the rotor and stator carrying respective pluralities of parallel, circumferentially extending rows of cavities, and the cavities being disposed with:

(a) the cavities in adjacent rows on the stator circumferentially offset;

(b) the cavities in adjacent rows on the rotor circumferentially offset; and

(c) the rows of cavities on the stator and rotor axially offset.

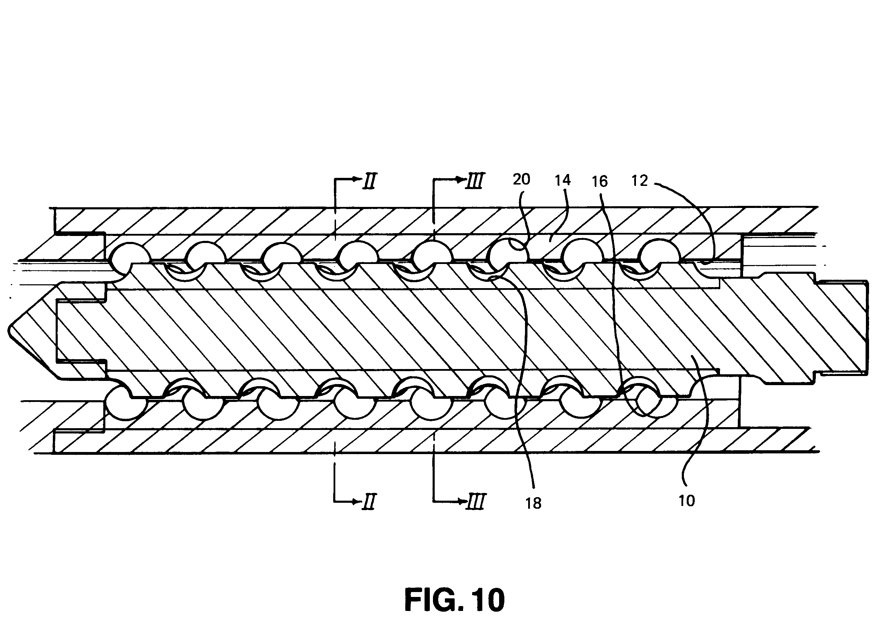

One possible example of such a Cavity Transfer Mixer which is suitable for use in the technique of the present invention is now described with reference to Figures 10 to 13 of the accompanying drawings.

The mixer illustrated in Figs. 10 to 13 includes a rotor 10 which is rotatably mounted within a basically cylindrical bore 12 in a stator 14. The right-hand end of the rotor 10, as viewed in Fig. 10, is adapted to be keyed to the output end of a screw conveyor (not shown) and the left-hand end of the stator 14 is adapted to be attached to an extrusion die (not shown) whereby material being processed, e.g. polymer is forced between the rotor and stator in passing from the screw conveyor to the extrusion die.

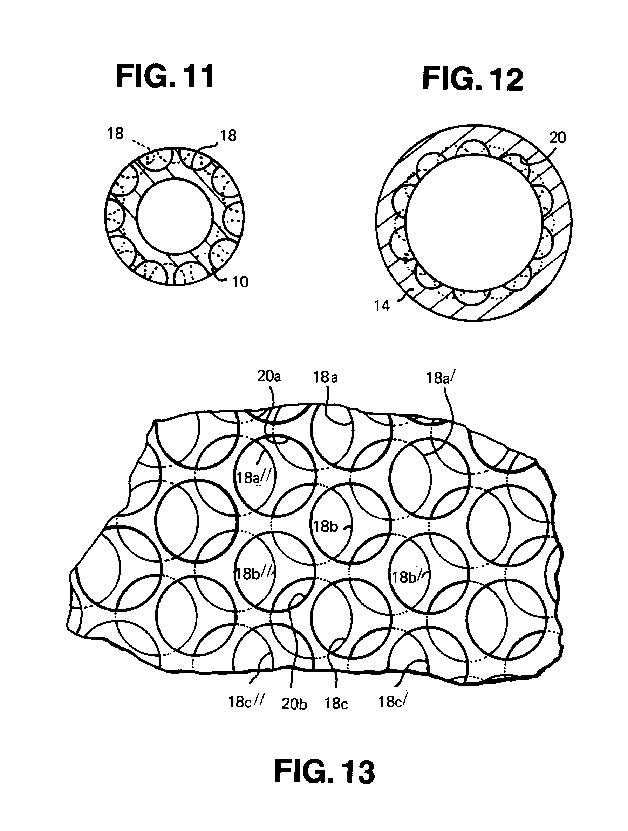

As shown in the drawings, the facing surfaces 16 and 12 on the rotor and stator are formed with respective pluralities of hemispherical cavities 18, 20. The cavities 18 on the rotor are disposed in a plurality of circumferentially extending rows. As indicated in Figs. 11, 12 snd 13 adjacent rows on the rotor are circumferentially displaced such that the centre of each cavity in a given row lies midway; between the centres of the two nearest cavities in the or each adjacent row. This can best be seen from the developed view of Fig. 13 where, for example, the circles 18a, 18b, 18c represent the cavities in one row on the rotor and the circles 18a', 18b', 18c' and 18a'', 18b'', 18c'' represent the cavities in the adjacent rotor rows. It will be noted that the circle identified as 18b is offset in the circumferential direction from the adjacent circles 18a', 18b', 18a'' and 18b'' by half the distance between the centres of any two adjacent cavities in a row, e.g. between the centres of the cavities 18a and 18b.

In a similar manner, the cavities 20 on the stator are disposed in a plurality of circumferentially extending rows, adjacent rows on the stator again being circumferentially displaced such that the cavities in a given row are offset by half the distance between the centres of any two adjacent cavities in a row.

In addition to the above-described offset nature of the adjacent rows of cavities on the rotor and stator, the relative axial positions of the rows on the rotor and stator are also offset as best seen in Fig. 13, such that the circumferential line joining the centre of any given row of cavities on the stator lies in the same axial position as a circumferential line positioned midway between the two circumferential lines joining the centres of the cavities in the two adjacent rotor rows. Thus, for example, in Fig. 13 the centres of the stator cavities 20a, 20b lie on a circumferential line positioned midway between the circumferential line joining the centres of rotor cavities 18a'', 18b'', 18c'' and the circumferential line joining the centres of the rotor cavities 18a, 18b, 18c.

This arrangement results in several practical advantages compared with other known arrangements, including the facts that (a) the mixing capacity for the same surface area is considerably increased, (b) the configuration of the hemispherical cavities can be arranged so that overlaps occur between three cavities at any given time so that extra mixing or blending is obtained by repeated division of the melt streams, and (c) that the hemispherical shape gives excellent streamlining so that, for example, polymer stagnation will not occur and purging is efficient when polymer changes are made.

In use, a cavity transfer mixer of the above described type performs a mixing process in which two or more components are mixed by transfer between rows of the cavities within both the hollow cylindrical stator 14 and the cylindrical rotor 10 the mixing process being obtained by repeated cutting and turning operations on the mixture at the transfers between cavities on the opposed faces of the stator and rotor and by dividing the mixture flow between pairs of adjacent cavities on the same rotor or stator face by means of a respective overlapping cavity on the opposite stator or rotor face.

In accordance with one embodiment of the present technique, the polymer melt is passed through such a cavity transfer mixer, together with nitrogen gas, or a mixture of nitrogen and one or more other inert gases.

Referring now to Fig.2, there is illustrated diagrammatically a first embodiment wherein a cavity transfer mixer 30 of the type defined hereinbefore is connected to the output end of a plastics extruder 32, to which the polymer is introduced by a hopper feeder 34. The extruder is driven by a motor 36, usually an electric motor. The rotor of the cavity transfer mixer 30 is attached to the screw of the extruder and the stator to the extruder barrel such that the rotor rotates with the extruder screw. By this means, molten thermoplastic is introduced to the input (right-hand as viewed in Fig.2) end of the cavity transfer mixer 30. Nitrogen gas can also be introduced into or adjacent the input end of the cavity transfer mixer 30, by way of an inlet gas pipe 38. In being subjected to the special mixing action obtained by the cavity transfer mixer 30 it is found that uniform mixing of the nitrogen with the polymer occurs. The resulting polymer/nitrogen mix is cooled by a cooling jacket arrangement 40 and extruded via a die 42 to produce a mass of extruded foam 44, shaped into a product which may be a sheet, film, tube or other profile. As the melt passes out of the die, decompression occurs and the dissolved nitrogen comes out of solution as bubbles which expand to produce the foam 44.

The extruder 32 may be a general purpose helical screw-type extruder or one designed for high output rates, e.g. by using grooved feeds or special mixing screws.

This first embodiment is suitable for forms of medium density down to about 100 kg/m$^3$.

The addition of cooling, e.g. by using a cooled static mixer or a cooled screw extension to the cavity transfer mixer rotor, increases the viscosity of the polymer melt so that on expansion gas is less likely to diffuse out and bubbles are less inclined to coalesce or burst, so that low density foams can be achieved. The dissolved nitrogen plasticises the melt so that a processable viscosity exists. As the nitrogen comes out of solution at a comparatively low temperature, the viscosity will rise rapidly as the melt leaves the die, thereby giving an improved foam.

In the second embodiment shown in Fig.3, an extruder cavity transfer mixer 30, cooling zone 40 and die 42 are again used but with the addition of a separate drive 46 to provide higher speeds than achieved with the rotor attached directly to the rotor screw and with the addition of a gear pump 48.

The higher rotor speed enables higher nitrogen levels to be uniformly mixed, whilst the gear pump generates the higher pressures necessary for the solution of higher nitrogen levels. As a result, lower density foams can be produced.

As an alternative to the nitrogen input shown at 47 in Fig. 3, there is advantage in the latter embodiment in introducing the nitrogen gas upstream of the gear pump 48 as shown in Fig. 3 at 51, since this reduces the injection pressures needed.

It is also advantageous in some cases for the mixer itself to be cooled so as to perform the cooler of the mix itself, or as part of a cooling system. For example, cooling water for the mixer 30 and/or cooler 40 may be introduced to internal cooling cavities in the mixer 30 and/or cooler 40 by way of a rotary union 49 (Fig. 3).

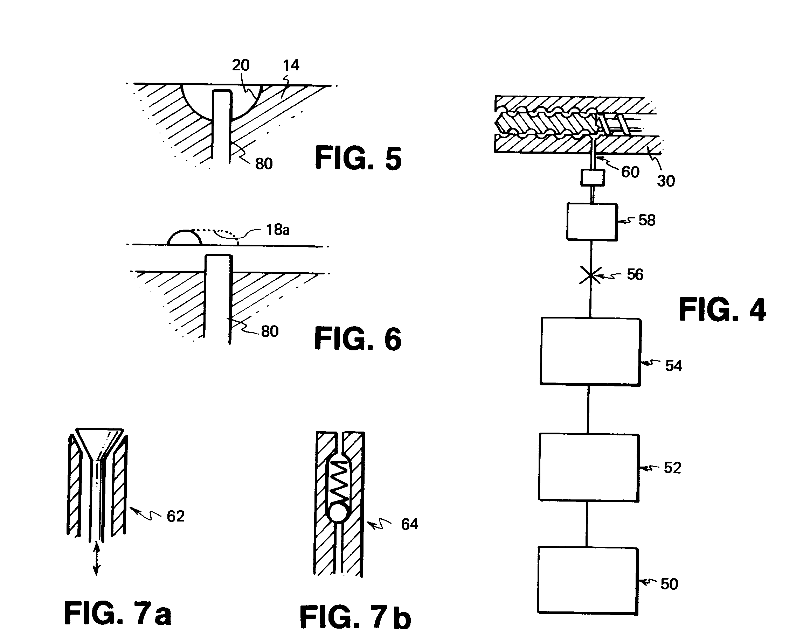

Fig. 4 illustrates one possible system for the supply of nitrogen gas to the mixer 30. Nitrogen gas is stored in a gas cylinder 50, the gas pressure being boosted in an air-driven gas boost compressor 52 of the types currently available which are capable of pressures up to 700 bar. the pressurised gas is stored in a reservoir 54 and can be supplied, via a suitable valve 56 and meter 58 to a gas injector 60.

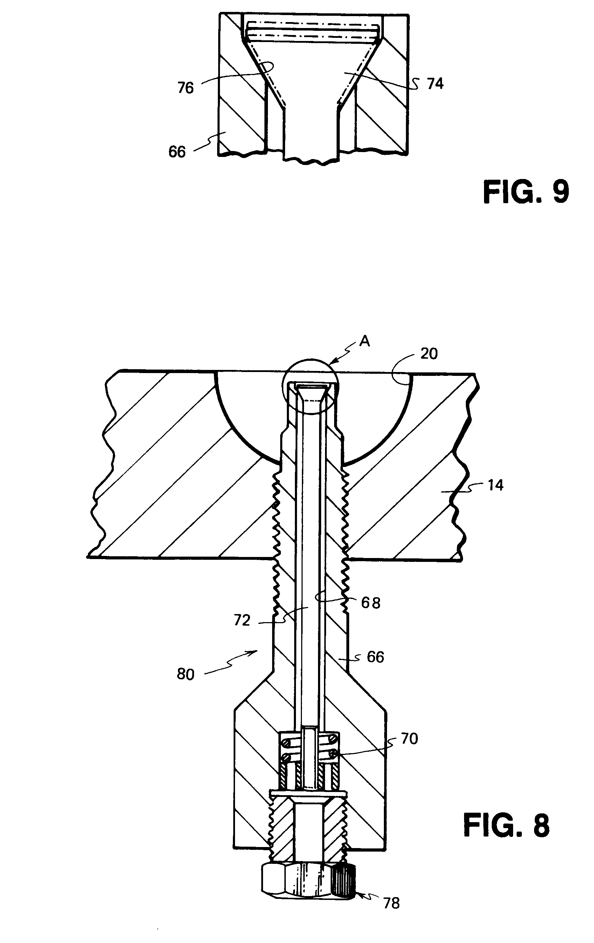

The gas injector can comprise a simple non-return or check valve, such as a poppet valve 62 (Fig. 7a) or ball check valve 64 (Fig. 7b). A more detailed view of a typical poppet valve arrangement 80 is shown in Figs. 8 and 9. This comprises an elongate injector body 66 having a longitudinal through-bore 68. Longitudinally displaceable within the bore 68, against the biasing effect of a coil spring 70, is an elongate valve stem 72 having a frusto-conical valve body 74 at one end which cooperates with a correspondingly frusto-conical valve seat 76 (see Fig. 9). Gas is supplied to the injector via a standard connector 78.

Fig. 8 shows the outlet end of the gas injector 80 emerging within one of the hemi-spherical cavities 20 in the stator 14 of a cavity transfer mixer of the type shown in Figs. 10 to 13 (see also Fig. 5). This arrangement is found to be suitable for larger machines, for example 90m.m. and above. For smaller machines it is usually found to be more suitable for the injector outlet to face a rotor cavity 18a which, as illustrated diagrammatically in Figure 6, can be of the type which is extended in a direction along the axis of the mixer. The provision of extended rotor cavities at the upstream end of the mixer is often made to improve initial introduction of the mix into the mixer.

It has been found that the mixing process performed by the aforegoing techniques is sufficient to achieve the necessary uniform mixing of the nitrogen and polymer melt.

## Claims

1. A method for the production of foamed thermoplastics using nitrogen gas as the foaming agent, wherein the nitrogen gas is mixed with a polymer melt in a mixing apparatus of the type comprising a hollow cylindrical stator, (not necessarily static), and a cylindrical rotor journalled for rotation within the stator, the facing cylindrical surfaces of the rotor and stator carrying respective pluralities of circumferentially extending rows of cavities, between which material to be mixed is passed in travelling through the mixer.

2. A method as claimed in claim 1, wherein the nitrogen gas is introduced to the mixer within one of the stator cavities adjacent the upstream end of the mixer, considered in the direction of material passage therethrough.

3. A method as claimed in claim 1, wherein the nitrogen gas is introduced to the mixer at a location opposite a rotor cavity and adjacent the upstream end of the mixer, considered in the direction of material passage therethrough.

4. An apparatus for the production of foamed thermoplastics using nitrogen gas as the foaming agent, the apparatus characterised by a mixer (30) of the type comprising a hollow cylindrical stator (14) (not necessarily static), a cylindrical rotor (10) journalled for rotation within the stator (14), the facing cylindrical surfaces of the rotor and stator carrying respective pluralities of circumferentially extending rows of cavities (18, 20), between which material to be mixed is passed in travelling through the mixer, an extruder (32) for supplying polymer melt to the input end of the mixer (30), and a gas inlet (38) disposed adjacent or upstream of the inlet end of the mixer (30) for enabling nitrogen gas to be introduced thereto.

5. Apparatus as claimed in claim 4, wherein the miner (30) is a cavity transfer mixer in which the cavities are disposed with (a) the cavities (20) in adjacent rows on the stator circumferentially offset, (b) the cavities (18) in adjacent rows on the rotor circumferentially offset, and (c) the rows of cavities (20, 18) on the stator and rotor axially offset.

6. Apparatus as claimed in claim 4 or 5, wherein there is provided a cooling means (40) at the outlet end of the mixer (30) for cooling the polymer/nitrogen mixture prior to this being passed through a die (42).

7. Apparatus as claimed in claim 4, 5 or 6, wherein the extruder (32) has a screw which is attached directly to the rotor (10) of the mixer (30) so that the rotor and screw rotate together.

8. Apparatus as claimed in claim 4, 5 or 6, wherein the rotor (10) of the mixer (30) is driven by a separate drive means (46) so as to enable it to be driven at a faster or lower speed than the screw of the extruder (32).

9. Apparatus as claimed in any of claims 4 to 8 wherein the gas inlet comprises a gas injector (80) disposed within one of the stator cavities (18) adjacent the upstream end of the mixer, considered in the direction of material passage therethrough.

10. Apparatus as claimed in any of claims 4 to 8 wherein the gas inlet comprises a gas injector disposed at a location opposite a rotor cavity (18) and adjacent the upstream end of the mixer, considered in the direction of material passage therethrough.

11. Apparatus as claimed in claim 8, including a gear pump (48) for transferring the polymer melt from the extruder (32) to the mixer (30).

12. Apparatus as claimed in claim 11, wherein the nitroen inlet is disposed upstream of the gear pump (48).

# FIG. 1

# FIG. 2

# FIG. 3

**FIG. 5**

**FIG. 6**

**FIG. 7 a**

**FIG. 7 b**

**FIG. 4**

EP 0 463 759 A2

FIG. 9

FIG. 8

FIG. 10

**FIG. 11**

**FIG. 12**

18          18

10

20

14

20a          18a                    18a/

18a//

18b

18b//          18b/

18c//   20b   18c   18c/

**FIG. 13**